# EUROPÄISCHE PATENTSCHRIFT

(11) **EP 1 103 928 B1**
(45) Veröffentlichungstag und Bekanntmachung des Hinweises auf die Patenterteilung: **17.01.2007**
(21) Anmeldenummer: 00124131.4
(22) Anmeldetag: 07.11.2000
(51) Int. Cl.: G07C 7/00

(54) **Fahrtschreiber mit einer Druckvorrichtung**
Tachograph with a printing device
Tachygraphe avec un dispositif d'impression

(30) Priorität: 27.11.1999 DE 29920901 U
(43) Veröffentlichungstag der Anmeldung: 30.05.2001
(73) Patentinhaber: SIEMENS AKTIENGESELLSCHAFT, 80333 München (DE)
(72) Erfinder: Lais, Norbert, Dipl.-Ing. (FH), 78052 Villingen-Schwenningen (DE)

(56) Entgegenhaltungen:
- EP-A- 0 372 753
- EP-A- 0 918 222
- DE-U- 29 812 216
- US-A- 4 641 980
- US-A- 5 860 753
- US-A- 6 120 201
- PATENT ABSTRACTS OF JAPAN Bd. 1999, Nr. 08, 30. Juni 1999 (1999-06-30) -& JP 11 078146 A (FUJI PHOTO FILM CO LTD), 23. März 1999 (1999-03-23)

## Beschreibung

Die Erfindung betrifft einen Fahrtschreiber mit einer Druckvorrichtung, welche einen Thermodruckkopf und einen frontseitig aus dem Gehäuse des Fahrtschreibers herausbewegbaren Träger zum Nachladen eines den Druckmaterialvorrat bildenden Bandwickels sowie eine mit dem Thermodruckkopf unter Zwischenlage des Druckmaterials kraftschlüssig in Wirkverbindung stehende, von einem Laufwerk angetriebene Transportwalze aufweist.

Ein derartiger Fahrtschreiber ist aus der EP-A-0918222 bekannt. Dabei ist die gesamte Druckvorrichtung umfassend den Thermodruckkopf, die Transportwalze und den Bandwickel aus dem Fahrtschreiber herausbewegbar.

Die US-A-4641980 beschreibt einen Drucker, bei dem die Transportwalze und der Bandwickel auf einem gemeinsamen Rahmen befestigt sind, welcher motorisch aus dem Gehäuse heraus bewegt werden kann, während der Druckkopf im Gehäuse verbleibt. Nach dem Zurückfahren in das Gehäuse wird der Druckkopf gegen die Transportwalze gedrückt. Vorher ist der Bandwickel über die Transportwalze zu legen. Das Ende des Bandwickels tritt durch eine Öffnung zwischen einer an dem Gehäuse befindlichen Schneidkante und einer Frontplatte des Rahmens hindurch.

Fahrtschreiber, welche nicht für die Verwendung von Diagrammscheiben als Aufzeichnungsträger ausgerüstet sind, sondern bei welchen die ermittelten Fahrt- und Arbeitszeitdaten in entsprechend ausgebildeten Massenspeichern abgelegt werden, machen für die Dokumentation in Form eines visuell lesbaren Beleges geeignete Druckvorrichtungen erforderlich, die innerhalb der Fahrtschreiber angeordnet werden müssen, da in einem Fahrerhaus eines Nutzfahrzeuges Freiraum für den Einbau eines selbständigen, mit dem Fahrtschreiber korrespondierenden Druckers im Allgemeinen nicht gegeben ist.

Einer der Vorteile dieser rein elektronisch erfassenden Fahrtschreiber, nämlich eine höhere Flexibilität bezüglich ihrer Anordnung innerhalb des noch möglichen Handhabungsbereichs des Fahrers wird, wenn im Gegensatz zur Verwendung von vorsteckbaren, kartenförmigen Druckträgern ein Druckprinzip mit streifen- bzw. bandförmigem Druckmaterial Anwendung finden soll, dadurch eingeschränkt, dass es erforderlich ist, dass die betreffende Druckvorrichtung mit dem Druckmaterialvorrat geladen und der Anfangsabschnitt des Druckmaterials in Druckposition gebracht werden muss. Dabei kommt erschwerend hinzu, dass Fahrtschreiber in der Regel als Einbaugeräte konzipiert und somit frontwandbündig eingebaut sind, das heißt, dass lediglich ein frontseitiger Zugang zum Nachladen des Druckmaterialvorrats unter Verwendung einer Schublade oder eines frontseitig aufschwenk-/aufklappbaren Trägers möglich ist.

Die Aufgabe der vorliegenden Erfindung bestand somit darin, die gattungsgemäße Druckvorrichtung derart in einem Fahrtschreiber anzuordnen, dass die Handhabung beim Nachladen des Druckmaterial-Bandwickels und beim Indruckpositionbringen des Anfangsabschnitts des Druckmaterials in allen in Frage kommenden Einbausituationen des Fahrtschreibers auf relativ einfache Weise erfolgen kann.

Die Lösung der Aufgabe beschreibt der Schutzanspruch 1. Weitere vorteilhafte Ausgestaltungen und Ausführungsbeispiele der Erfindung gehen aus den Unteransprüchen hervor.

Der entscheidende Vorteil, der mit der erfindungsgemäß in einem Fahrtschreiber ausgebildeten Druckvorrichtung bei allen dargestellten Ausführungsvarianten erzielt wird, ist insbesondere darin zu sehen, dass nach dem Einsetzen des Bandwickels in die hierfür vorgesehene Aufnahme und dem nachfolgenden Schließen, beispielsweise einer Schublade, das Druckmaterial selbsttätig in die Druck- und Transportposition zwischen dem Thermodruckkopf und der Transportwalze, die außerdem als Druckwiderlager dient, gelangt. Es ist zuvor lediglich dafür Sorge zu tragen, dass ein genügend langer Anfangsabschnitt von Druckmaterial von dem Bandwickel absteht bzw. abgezogen worden ist. Dabei dient, was einen entscheidenden Aspekt der erfindungsgemäßen Lösung darstellt, der Schließspalt bzw. ein parallel zur Transportwalze bestehender Abschnitt des Schließspaltes zwischen der Frontplatte der Schublade und der Frontwand des Fahrtschreibers dem Druckmaterial als Führung bzw. den erstellten Druckbelegen als Ausgabeschlitz, wobei zweckmäßigerweise wenigstens eine der außenliegenden Kanten des Ausgabeschlitzes als Abreißkante ausgebildet ist. Mit anderen Worten, der Thermodruckkopf und die Transportwalze sind derart angeordnet und einander zugeordnet, dass der Schließspalt die Führung des durch die Transportwalze vorzuschiebenden Druckmaterials übernehmen kann. Dabei wird diese Führung unter Zwischenlage des Druckmaterials beim Zuschieben der Schublade gebildet. Gleichzeitig kommen beim Zuschieben der Schublade der Thermodruckkopf und die Transportwalze in Wirkverbindung, wobei mittels einer geeigneten, der Welle und insbesondere den Lagerzapfen der Transportwalze zugeordneten Fangvorrichtung eine exakte Lagesicherung der Transportwalze in der Druckposition erzielbar ist.

Die Erfindung bietet somit den Vorzug, dass das Einsetzen eines Bandwickels in die vorgesehene Aufnahme und das nachfolgende Indruckpositionbringen des Druckmaterials auch ohne unmittelbaren Sichtkontakt in bzw. auf die Schublade erfolgen kann.

Als Vorteil ist ferner hervorzuheben, dass der Thermodruckkopf weitgehend geschützt innerhalb des Gehäuses des Fahrtschreibers oder dessen Frontwand angeordnet werden kann und somit die vieladrige elektrische Verbindung des Thermodruckkopfes nicht bewegt werden muss. Demgegenüber sind, wenn das die Transportwalze treibende Laufwerk als Ganzes der Schublade zugeordnet wird, wesentlich weniger flexible Leitungen erforderlich. Außerdem befinden sich bei einer solchen Anordnung die Getriebeelemente zwischen dem treibenden Motor und der Transportwalze permanent in Eingriff und das Laufwerk kann innerhalb der Schublade zugriffsicher gekapselt werden. Selbstverständlich lässt sich, wenn gewisse Nachteile in Kauf genommen werden, die Erfindung auch mit der umgekehrten Anordnung von Thermodruckkopf und Transportwalze oder mit einer Anordnung des Laufwerkes, bei der ein In- und Außereingriffbringen der Antriebsverbindung der Transportwalze nötig ist, realisieren.

Ferner bietet die gefundene Lösung, durch räumliche Verteilung der Druckerbauelemente eine günstigere Raumnutzung als sie bei Verwendung eines handelsüblichen Druckwerkes möglich wäre, das heißt, es handelt sich um eine gerätespezifische bzw. geräteoptimierte Lösung. Außerdem entfallen zusätzliche Vorkehrungen zur Beseitigung von Papierstau. Entscheidend ist aber, dass ein Einfädeln des Bandanfangs zwischen Thermodruckkopf und Transportwalze, was unmittelbare Beobachtbarkeit und erhöhte Sorgfalt nötig macht, nicht erforderlich ist.

Weitere Vorzüge der Erfindung gehen aus den Beschreibungen der einzelnen Ausführungsbeispiele hervor.

Im folgenden sei die Erfindung anhand von Zeichnungen erläutert. Es zeigen:
- Figur 1: eine Frontansicht eines flachen, quaderförmigen Fahrtschreibers
- Figur 2: eine schematisch dargestellte Seitenansicht der als Druckvorrichtung zusammenwirkenden Bauelemente des Fahrtschreibers gemäß Figur 1, wobei der Träger als Schublade ausgebildet ist,
- Figur 3: eine Darstellung gemäß Figur 2 bei geschlossener Schublade, wobei der Thermodruckkopf und die Transportwalze in Wirkverbindung stehen,
- Figur 4: eine schematisch dargestellte Seitenansicht der als Druckvorrichtung zusammenwirkenden Bauelemente einer Varianten des Fahrtschreibers gemäß Figur 2, bei der die Aufnahme für den Bandwickel rechtwinklig zu einer Seitenwand der Schublade zugänglich ist ,
- Figur 5: eine Schemaskizze eines weiteren Ausführungsbeispiels eines erfindungsgemäß ausgebildeten Fahrtschreibers mit einer in einer Klapplade ausgebildeten Aufnahme für den Bandwickel,
- Figur 6: eine Schemaskizze eines Ausführungsbeispiels eines Fahrtschreibers mit einer an einer Schwenklade ausgebildeten Aufnahme für den Bandwickel.

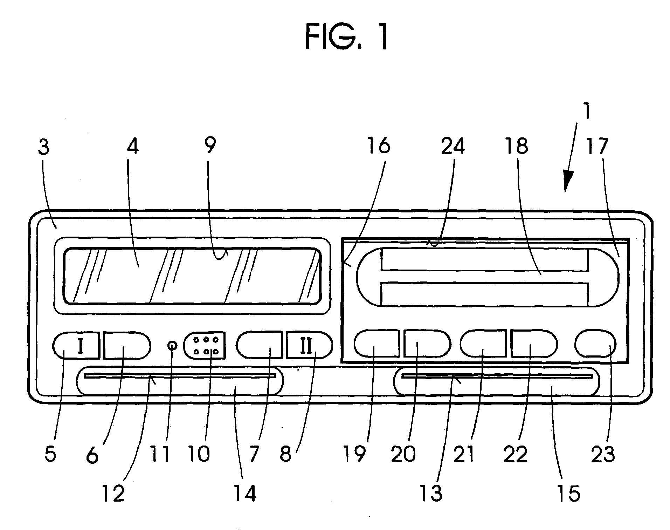

Der in Figur 1 dargestellte, als Einbaugerät konzipierte Fahrtschreiber 1 weist eine mit einem quaderförmigen Gehäuse 2 verbundene Blende bzw. eine Frontwand 3 auf, in welcher ein Display 4 gehaltert ist sowie Tasten 5, 6 und 7, 8 angeordnet sind. Dabei dienen die Tasten 5 und 8 dem Anmelden von Fahrer und Beifahrer, die Tasten 6 und 7 dem Freigeben der jeweiligen Datenkarten. Mit 9 ist ein dem Display 4 zugeordneter Fensterausschnitt bezeichnet. Ein gefedert gelagertes Schließelement 10 deckt eine Steckerfassung ab; 11 stellt eine Warnlampe dar. Schlitze 12 und 13 dienen dem Eingeben von den Fahrern zugeordneten Datenkarten, wobei die Schlitze 12, 13 im Grunde von jeweils trichterförmigen Senkungen 14 und 15 ausgebildet sind. Ferner ist in der Frontwand 3 eine Aussparung 16 vorgesehen, welche von einer Frontplatte 17 abgedeckt ist, die sich gestalterisch, insbesondere flächenbündig in die Frontfläche der Frontwand 3 des Fahrtschreibers 1 einfügt. Die Frontplatte 17 ist Teil eines aus dem Fahrtschreiber 1 herausbewegbaren Trägers einer Druckerbaugruppe, beispielsweise einer verschiebbar gelagerten Schublade. Dieser kann ein bistabiles Rastgetriebe zugeordnet sein, welches, im Falle dass Druckmaterial nachgefüllt werden soll, durch Betätigen der Frontplatte 17, die somit als Taste dient, ent- und verriegelbar ist. Außerdem sind in der Frontplatte 17, die mit einer Griffleiste 18 versehen ist, mehrere Tasten 19, 20 und 21, 22 sowie 23 gelagert. Diese dienen zusammen mit den Tasten 5 und 8 dem Anwählen der wichtigsten Arbeitszeitdaten von Fahrer und Beifahrer, dem Vorwärts- und Rückwärtsblättern in den jeweiligen Datensätzen einer angewählten Datenart und der Druckauslösung.

Die Figur 1 zeigt ferner ein wesentliches Merkmal der Erfindung, nämlich die Maßnahme, dass ein Abschnitt des zwischen der Aussparung 16 in der Frontwand 3 und der Frontplatte 17 bestehenden Schließspaltes als Ausgabeschlitz 24 für die Druckbelege ausgebildet ist.

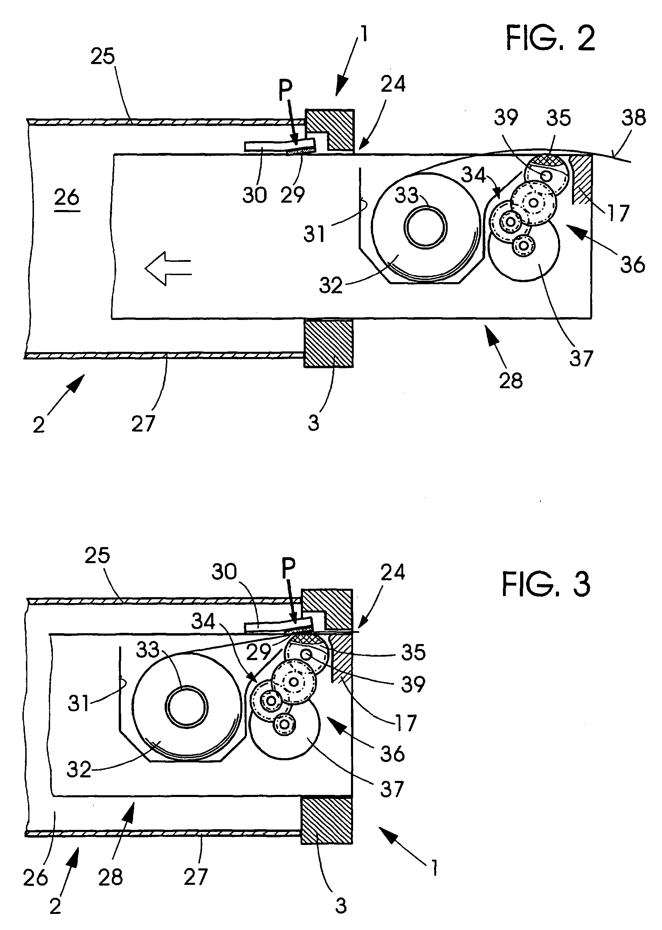

Die weitgehend schematisierte Figur 2 zeigt teilweise dargestellte Gehäusebauteile 25, 26, 27 des Fahrtschreibers 1 zusammen mit einer verschiebbar gelagerten Schublade 28. Dabei handelt es sich bei den Gehäusebauteilen 25, 26 und 27 um ein Deckelteil, eine Seitenwand und ein Bodenteil des Fahrtschreibers 1, die in geeigneter Weise mit der Frontwand 2 verbunden sind. Mit 29 ist ein Thermodruckkopf bezeichnet, der an einem Kühlkörper 30 angebracht ist. Letzterer ist gefedert gelagert, was mit dem Pfeil P symbolisiert sein soll. Eine in der Schublade 28 ausgebildete Aufnahme 31 dient einem den Druckmaterialvorrat bildenden Bandwickel 32 als lose Halterung. Denkbar sind innerhalb der Aufnahme 31 ausgebildete, federnde Finger, die mit dem Wickelkern 33 des Bandwickels 32 im Sinne einer axialen Lagerung des Bandwickels 32 zusammenwirken. Zwischen der Aufnahme 31 und der Frontplatte 17 der Schublade 28 befindet sich ein Bauraum 34, in welchem eine Transportwalze 35 sowie ein diese treibendes Laufwerk 36 gelagert sind. Mit 37 ist der Motor des Laufwerkes 36 bezeichnet. Ferner dient der Bauraum 34 der Unterbringung wenigstens einer nicht dargestellten Leiterplatte, auf welcher den Tasten 19, 20, 21, 22 und 23 gemäß Figur 1 zugeordnete Kontakte angeordnet sind. Die Figur 2 zeigt die aus dem Fahrtschreiber 1 herausgezogene Schublade 28 in einem Zustand nachdem der Bandwickel 32 in die Aufnahme eingelegt und, was erfindungswesentlich ist, ein Anfangsabschnitt 38 des Druckmaterials lose über die Transportwalze 35 und die Frontplatte 17 der Schublade 28 gelegt worden ist. Beim Einschieben der Schublade 28 in den Fahrtschreiber 1 in Pfeilrichtung kommt die Transportwalze 35 in Wirkverbindung mit dem letztlich federnd aufliegenden Thermodruckkopfes 29, wobei der Anfangsabschnitt 38 des Druckmaterials sich im als Ausgabeschlitz 24 dienenden Schließspaltabschnitt zwischen der Frontwand 3 des Fahrtschreibers und der Frontplatte 17 der Schublade 28 befindet. In der in Figur 3 gezeigten Stellung der Schublade 28, ist die Druckvorrichtung druck- und transportbereit; überstehendes Druckmaterial kann an einer den Ausgabeschlitz 24 begrenzenden Kante der Frontplatte 17 oder der Frontwand 3 abgetrennt werden. Bei diesem Ausführungsbeispiel wird der Bandwickel 32 im wesentlichen von "oben" in die Aufnahme 31 eingelegt. Dabei ist es aufgrund des erfindungsgemäßen Einlegeprinzips nicht zwingend erforderlich, daß ein unmittelbarer Sichtkontakt in die Aufnahme 31 besteht, sodass der Fahrtschreiber 1 auch im Dachunterbau eines Fahrzeuges eingebaut sein kann. Zweckmäßigerweise wird beim Einschieben der Schublade, damit eine vom Führungsspiel der Schublade 28 unabhängige, exakte Ausrichtung zum Thermodruckkopf 29 gegeben ist, die Transportwalze 35 in einer beispielsweise der Welle 39 zugeordneten Fangvorrichtung aufgenommen.

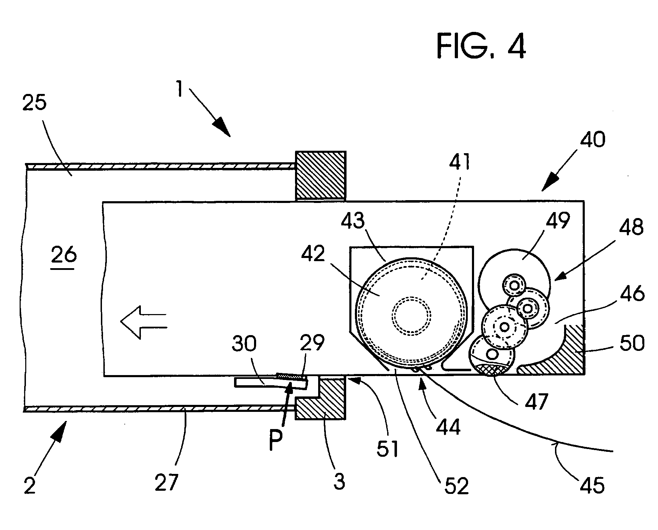

Eine mit der Figur 4 in der Ladeposition dargestellte Anordnung der Druckvorrichtung und eine dieser entsprechenden Ausbildung der Schublade 40 liegt die Verwendung einer einen Bandwickel 41 aufnehmenden Kassette 42 zugrunde. Letztere liegt lose in einer in der Schublade 40 ausgebildeten, als Aufnahme dienenden Kammer 43, und zwar derart, dass der aus einem in der Kassette 42 ausgebildeten Schlitz 44 austretende Anfangsabschnitt 45 des Druckmaterials im Gegensatz zu dem Ausführungsbeispiel gemäß den Figuren 1, 2 und 3 nach unten weist. Außerdem erfolgt das Einlegen der Kassette 42 in die Schublade 40 von der Seite her, das heißt, in praktisch jeder Einbaulage des Fahrtschreibers 1 steht bei diesem Ausführungsbeispiel ausreichend Freiraum für das seitliche Einschieben der Kassette 42 zur Verfügung. Ferner zeichnet sich diese Schubladenlösung dadurch aus, dass, indem die Schublade 40 nach oben geschlossen ist, herabfallender Schmutz nicht in die Kammer 43 und einen Bauraum 46 gelangen kann, in welchem in äquivalenter Weise wie im vorstehend beschriebenen Ausführungsbeispiel eine Transportwalze 47, ein diese treibendes Laufwerk 48, ein Motor 49 und gegebenenfalls nicht dargestellte Mittel zur Kontaktgabe durch von außerhalb einer Frontplatte 50 der Schublade 40 betätigbare Tasten angeordnet sind. Ansonsten erfolgt das Indruckpositionbringen des Anfangsabschnittes 45 des Druckmaterials in gleicher Weise wie bei dem zuerst genannten Ausführungsbeispiel. Das heißt, die Anordnung des Thermodruckkopfes 29 und die Ausbildung eines Ausgabeschlitzes 51 müssen der in Bezug auf die Schublade 40 nach unten übergreifenden Transportwalze 47 und dem nach unten austretenden Anfangsabschnitt 45 des Druckmaterials gerecht werden.

Der Vollständigkeit halber sei darauf hingewiesen, dass die Kammer 43 und eine an ihr ausgeformte Auslassöffnung 52 derart ausgebildet sein können, dass auch ein nicht kassettierter Bandwickel verwendet werden kann, wobei darauf zu achten ist, dass der Bandwickel derart in die Kammer 43 eingeschoben wird, dass er sich beim Abziehen des Druckmaterials in Richtung der Frontplatte 50 der Schublade 40 im Gegenuhrzeigersinn dreht. Die Auslassöffnung 52 ist in diesem Falle als relativ schmaler Schlitz auszubilden. Ferner ist es auch bei diesem Ausführungsbeispiel zweckmäßig eine vorzugsweise der Achse der Transportwalze 47 zugeordnete Fangvorrichtung, einen in Einschubrichtung der Schublade 40 vor dem Thermodruckkopf angeordnete, als Druckmaterialsensor dienende Reflexlichtschranke sowie einen die Schließstellung der Schublade 40 erkennenden Sensor vorzusehen. Das Öffnen und Schließen der Schublade 40 kann auch in diesem Falle von Hand, gegebenenfalls von einer Hilfskraft unterstützt oder ausschließlich motorbetätigt erfolgen, wobei, wie aus Figur 1 hervorgeht, für eine Betätigung von Hand an der Frontplatte 50 ein geeignetes Griffelement vorgesehen werden muß.

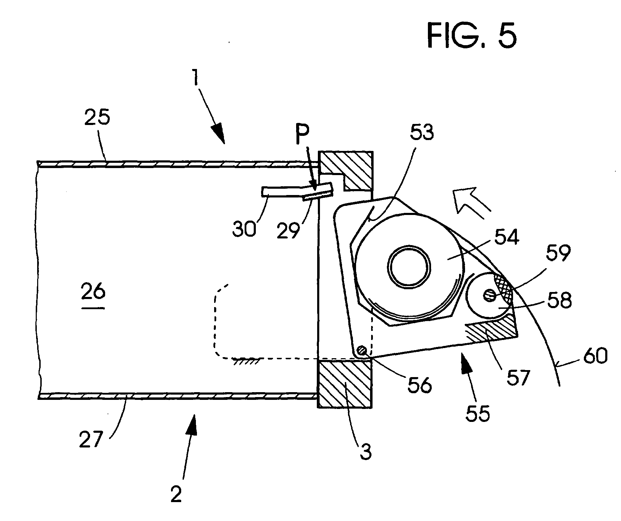

Mit der Figur 5 ist ein Ausführungsbeispiel in der Ladeposition skizziert, bei welchem eine Aufnahme 53 für einen Bandwickel 54 in einer als Träger dienenden Klapplade 55 ausgebildet ist. Die Klapplade 55 ist ihrerseits um eine Achse 56 in der Frontwand 3 des Fahrtschreibers 1 schwenkbar gelagert. Da bei dieser Lösung zwischen der Aufnahme 53 und einer Frontplatte 57 der Klapplade 55 zwangsweise nur ein geringer Bauraum gegeben ist, befindet sich, was der Einfachheit halber nicht dargestellt ist, der die Transportwalze 58 antreibende Motor und das zwischen diesem und der Welle 59 der Transportwalze 58 erforderliche Räderwerk in einem seitlich an der Aufnahme 53 vorgesehenen Bauraum, wobei eine Anordnung des Motors derart getroffen ist, dass dessen elektrische Verbindungsleitungen beim Verschwenken der Klapplade 55 nicht wesentlich bewegt werden. Diese Lösung bietet den Vorzug, dass das Laden der Klapplade 55 mit dem Bandwickel 54, bezogen auf den Fahrtschreiber 1, weitgehend von vorn erfolgen kann und hierzu keine Freiräume über oder neben der Frontfläche des Fahrtschreibers 1 benötigt werden, sodass ein derart ausgestatteter Fahrtschreiber 1 für praktisch alle vorkommende Einbausituationen geeignet ist. Als vorteilhaft ist ferner zu erwähnen, dass, da die Transportwalze 58, der Bandwickel 54 und die Frontplatte 57 aufgrund der Schwenkbewegung der Klapplade 55 eine besonders enge Zuordnung zueinander haben müssen, ein Anfangsabschnitt 60 des Druckmaterials bei diesem Ausführungsbeispiel relativ kurz ist und nach dem Einlegen des Bandwickels 54 zwangsweise nach unten weisend absteht, die Gefahr der Schleifenbildung beim Schließen der Klapplade 55 vermieden ist. Denkbar ist, wie auch bei dem Ausführungsbeispiel gemäß den Figuren 1, 2 und 3, die Verwendung eines kassettierten Bandwickels. Rast- und Anschlagmittel sind vorgesehen, um die Klapplade 55 in der Schließstellung zu arretieren und eine stabile Bewegungsbegrenzung in der Offenstellung zu gewährleisten.

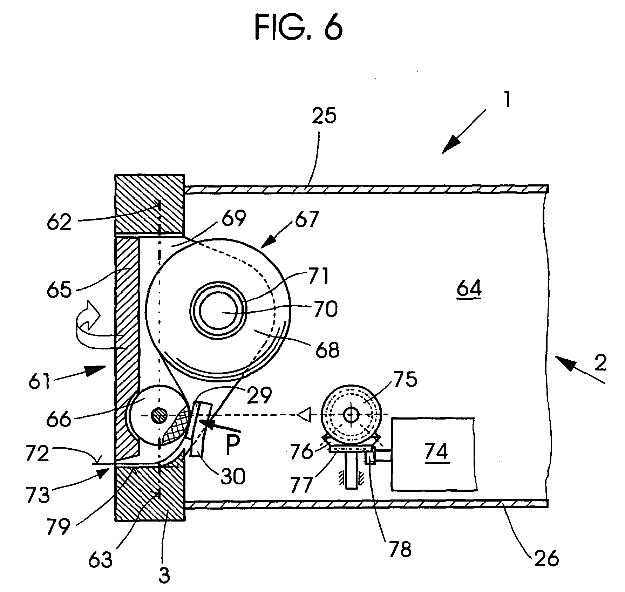

Die Figur 6 zeigt ein in Druck- und Transportposition befindliches Ausführungsbeispiel, welches eine als Träger dienende Schwenklade 61 aufweist, die um eine parallel zur Hochachse des Gehäuses 2 vorgesehene Achse drehbar ist. Beispielsweise sind strichpunktiert angedeutete Scharniermittel 62 und 63 vorgesehen, mittels denen die Schwenklade 61 in der Frontwand 3 des Fahrtschreibers 1 gelagert ist. Mit 64 ist die zweite Seitenwand des Gehäuses 2 bezeichnet. An einer Frontplatte 65 der Schwenklade 61, die einerseits der Lagerung der Transportwalze 66 dient, andererseits als Aufnahme 67 für den Bandwickel 68 vorgesehen ist, ist ein Wandschenkel 69 angeformt, an welchem eine Achse 70 fliegend befestigt ist. Zweckmäßigerweise sind an der Achse 70 Mittel vorgesehen, die eine selbsttätige axiale Sicherung eines Bandwickels 68 bei dessen Aufstecken auf die Achse 70 bewirken. Vorstellbar ist in diesem Zusammenhang eine in der Achse 70 gefedert gelagerte Klinke oder, da der Wickelkern 71 des Bandwickels 68 eine gewisse elastische Verformbarkeit aufweist, beispielsweise ein an der Achse 70 angeformter Ringwulst. Mit 72 ist in Figur 6 ein in einem Ausgabeschlitz 73 liegender Anfangsabschnitt des vom Bandwickel 68 abgezogenen Druckmaterials bezeichnet. Dabei stellt der Ausgabeschlitz 73 einen Abschnitt, und zwar einen transportwalzenparallelen Abschnitt des zwischen der Frontwand 3 des Fahrtschreibers 1 und der Schwenklade 61 bestehenden Schließspaltes dar. In ähnlicher Weise, wie bei dem Ausführungsbeispiel gemäß Figur 5 kann der Antrieb der Transportwalze 66 beim vorliegenden Ausführungsbeispiel der Gegenseite des Wandschenkels 69 zugeordnet sein. Die Figur 6 zeigt ferner eine Lösung, bei der der Motor und ein nachgeschaltetes Laufwerk 74 ortsfest im Gehäuse 2 des Fahrtschreibers 1 angeordnet sind und der Antrieb der Transportwalze 66 über ein Kegelradgetriebe erfolgt. Dabei ist ein Kegelrad 75 der Transportwalze 66 axial zugeordnet und mit der Transportwalze 66 verdrehfest verbunden. Mit dem Kegelrad 75 in Eingriff steht ein weiteres Kegelrad 76, welches vorzugsweise auf oder in Verlängerung der Drehachse der Schwenklade 61 gelagert und über eine Kronenverzahnung 77 mit einem Zahnrad 78 des Laufwerkes 74 getrieblich verbunden ist. Diese Getriebeverbindung ermöglicht es, daß beim Öffnen und Schließen der Schwenklade 61, die sich axial an der Frontwand 3 abstützt (Stützfläche 79), der Antrieb der Transportwalze 66 nicht unterbrochen wird. Im übrigen bietet das vorstehend beschriebene Ausführungsbeispiel in gleicher Weise wie das Ausführungsbeispiel gemäß Figur 4 den Vorteil des seitlichen Eingebens des Bandwickels 68 in die Aufnahme 67, wobei die Schwenklade 61 lediglich um einen Winkel von ca. 60° geöffnet werden muß. Im Gegensatz zu einer Schublade als Träger der Druckvorrichtung läßt sich beim Ausführungsbeispiel gemäß Figur 6 eine exakte Lagerung der Schwenklade 61 realisieren, sodass eine Fangvorrichtung zur Ausrichtung der Transportwalze nicht erforderlich ist. Erwähnenswert ist ferner, dass die Lagerung des Bandwickels 68 auf einem Dorn oder einer Achse 70 spielfrei gestaltet werden kann und somit im Gegensatz zu einem lose in einer wannenförmigen Aufnahme liegenden Bandwickel eine Bewegung des Bandwickels 68 und weitgehend auch des vom Bandwickel 68 abstehenden Anfangsabschnitts 72 des Druckmaterials beim Schließen der Schwenklade 61 vermieden und dadurch auch eine Stabilisierung des vom Bandwickel 68 abstehenden und in diesem Falle konsequent nach unten weisenden Anfangsabschnitts 72 des Druckmaterials erzielt wird.

## Patentansprüche

1. Fahrtschreiber mit einer Druckvorrichtung, welche einen Thermodruckkopf (29) und einen frontseitig aus dem Gehäuse des Fahrtschreibers herausbewegbaren Träger zum Nachladen eines den Druckmaterialvorrat bildenden Bandwickels (32, 41, 54, 68) sowie eine mit dem Thermodruckkopf (29) unter Zwischenlage des Druckmaterials kraftschlüssig in Wirkverbindung stehende, von einem Laufwerk angetriebene Transportwalze (35, 47, 58, 66) aufweist, **dadurch gekennzeichnet,**
- **dass** der Thermodruckkopf (29) und die Transportwalze (35, 47, 58, 66) durch Herausbewegen des Trägers aus dem Gehäuse (2) des Fahrtschreibers (1) räumlich voneinander trennbar sind,
- der Thermodruckkopf (29) und die Transportwalze (35, 47, 58, 66) derart einander zugeordnet sind, dass nach einem erfolgten Einsetzen eines Bandwickels (32, 41, 54, 68) in den Träger beim Zurückbewegen des Trägers in das Gehäuse (2) ein von dem Bandwickel (32, 41, 54, 68) in geeigneter Länge abstehender Anfangsabschnitt (38, 45, 60, 72) des Druckmaterials selbsttätig zwischen dem Thermodruckkopf (29) und der Transportwalze (35, 47, 58, 66) eingespannt wird und sich nach erfolgtem Zurückbewegen des Trägers zwischen einer den Träger frontseitig begrenzenden Frontplatte (17, 50, 57, 65) und der Frontwand (3) des Fahrtschreibers (1) befindet und
- **dass** die Transportwalze (35, 47, 58) beim Zurückbewegen des Trägers in das Gehäuse (2) von einer der Welle (39, 59) der Transportwalze (35, 47, 58) zugeordneten Fangvorrichtung aufgenommen wird.

2. Fahrtschreiber nach Anspruch 1,
**dadurch gekennzeichnet,**
**dass** ein transportwalzenparalleler Abschnitt des zwischen der Frontplatte (17, 50, 57, 65) und der Frontwand (3) bestehenden Schließspaltes als Ausgabeschlitz (24, 51, 73) für die erstellten Druckbelege ausgebildet ist.

3. Fahrtschreiber nach Anspruch 1,
**dadurch gekennzeichnet,**
**dass** wenigstens eine der außenliegenden Kanten des Ausgabeschlitzes (24, 51, 73) als Abreißkante ausgeformt ist.

4. Fahrtschreiber nach Anspruch 1,
**dadurch gekennzeichnet,**
**dass** der Thermodruckkopf (29) in dem Gehäuse (2) angeordnet ist,
**dass** in dem Träger eine dem Bandwickel (32, 41) zugeordnete Aufnahme (31, 43) ausgebildet ist und
**dass** zwischen der Aufnahme (31, 43) und der den Träger frontseitig begrenzenden Frontplatte (17, 50) ein der Anordnung der Transportwalze (35, 47) und des die Transportwalze (35, 47) treibenden Laufwerkes (36, 48) dienender Bauraum (34, 46) vorgesehen ist.

5. Fahrtschreiber nach Anspruch 1,
**dadurch gekennzeichnet,**
**dass** der Träger derart ausgebildet ist, dass dem Laufwerk für den Antrieb der Transportwalze (58) ein Raum zugeordnet ist, der sich im wesentlichen in Achsrichtung des Bandwickels (54) seitlich an dessen Aufnahme (53) anschließt.

6. Fahrtschreiber nach Anspruch 1,
**dadurch gekennzeichnet,**
**dass** der Träger als eine um eine in Bezug auf die Hochachse des Fahrtschreibers (1) rechtwinklig angeordnete Achse (56) drehbar gelagerte Klapplade (55) ausgebildet ist.

7. Fahrtschreiber nach Anspruch 1,
**dadurch gekennzeichnet,**
**dass** der Träger als eine in Bezug auf die Frontwand (3) des Fahrtschreibers (1) rechtwinklig bewegbare Schublade (28, 40) ausgebildet ist.

8. Fahrtschreiber nach Anspruch 1,
**dadurch gekennzeichnet,**
**dass** der Träger als eine um eine in Bezug auf die Hochachse des Fahrtschreibers (1) parallel angeordnete Achse (62, 63) drehbare Schwenklade (61) ausgebildet ist.

9. Fahrtschreiber nach Anspruch 1,
**dadurch gekennzeichnet,**
**dass** der Träger derart ausgebildet ist, dass ein Bandwickel (41, 54, 68) im wesentlichen quer zur Hochachse des Fahrtschreibers (1) einsetzbar ist.

10. Fahrtschreiber nach Anspruch 7,
**dadurch gekennzeichnet,**
**dass** der Bandwickel (41) in einer in den Träger einsetzbaren, axial geschlitzten Kassette (42) aufgenommen ist.

11. Fahrtschreiber nach Anspruch 10,
**dadurch gekennzeichnet,**
**dass** die Kassette (42) unmittelbar in dem relativ zum Fahrtschreiber (1) verschieb-/verschwenkbaren Träger ausgeformt ist.

12. Fahrtschreiber nach Anspruch 9,
**dadurch gekennzeichnet,**
**dass** die Aufnahme (67) mit einer dem Wickelkern (71) des Bandwickels (68) zugeordneten, fliegend angeformten Achse (70) ausgestattet ist.

13. Fahrtschreiber nach Anspruch 12,
**dadurch gekennzeichnet,**
**dass** an dem freien Ende der Achse (70) ein der axialen Sicherung des Bandwickels (68) dienendes, gegenüber der Öffnung des Wickelkerns (71) des Bandwickels (68) ein Übermaß aufweisendes Sicherungsmittel ausgebildet ist.

14. Fahrtschreiber nach Anspruch 1,
**dadurch gekennzeichnet,**
**dass** bezogen auf die bevorzugte Einbaulage des Fahrtschreibers (1) der Thermodruckkopf (29), die Transportwalze (47, 66) und der Träger derart angeordnet bzw. gestaltet sind, dass der Anfangsabschnitt (45, 72) des Druckmaterials nach unten weisend vom Bandwickel (41, 68) absteht und
**dass** der untenliegende, transportwalzenparallele Abschnitt des Schließspaltes zwischen der Frontplatte (50, 65) des Trägers und der Frontwand (3) des Fahrtschreibers (1) als Ausgabeschlitz (51, 73) für die Druckbelege ausgebildet ist.

15. Fahrtschreiber nach Anspruch 1,
**dadurch gekennzeichnet,**
**dass** ein Sensor, vorzugsweise eine Reflexlichtschranke, vorgesehen ist, welcher beim Zurückbewegen des Trägers in das Gehäuse (2) einen vom Bandwickel (32, 41, 54, 68) abstehenden Anfangsabschnitt (38, 45, 60, 72) des Druckmaterials erkennt.

16. Fahrtschreiber nach Anspruch 1,
**dadurch gekennzeichnet,**
**dass** der Thermodruckkopf (29) gefedert gelagert ist und
**dass** zwischen dem Thermodruckkopf (29) und dem Träger eine keilgetriebliche Verbindung zum Anheben und Inwirkverbindungbringen des Thermodruckkopfes (29) mit der Transportwalze (35, 47, 58) während der Bewegung des Trägers in das Gehäuse (2) vorgesehen ist.

17. Fahrtschreiber nach Anspruch 1,
**dadurch gekennzeichnet,**
**dass** dem Thermodruckkopf (29) ein Anheben/Absenken bewirkende Antriebsmittel zugeordnet sind und
**dass** die Antriebsmittel durch einen die Position des Trägers tastender Sensor steuerbar sind.

18. Fahrtschreiber nach Anspruch 1,
**dadurch gekennzeichnet,**
**dass** der Thermodruckkopf (29) in Bezug auf die Bewegungsrichtung des Trägers geneigt angeordnet ist und
**dass** der Thermodruckkopf (29) beim Bewegen des Trägers in die Schließstellung unmittelbar durch die Transportwalze (35, 47, 58) in die Druckposition angehoben wird.

19. Fahrtschreiber nach Anspruch 1,
**dadurch gekennzeichnet,**
**dass** der Thermodruckkopf (29) derart im Gehäuse (2) gelagert ist, dass er zum Aufbringen der Druckkraft im wesentlichen in Bewegungsrichtung des Trägers bewegbar ist, wobei die Bewegung über die Transportwalze (66) eingeleitet wird und
**dass** dem Träger Verriegelungsmittel zugeordnet sind.

20. Fahrtschreiber nach Anspruch 1,
**dadurch gekennzeichnet,**
**dass** eine dem Schließspalt zugeordnete Abschneidvorrichtung vorgesehen ist.

## Claims

1. Tachograph with a printing device which has a thermal printing head (29) and a support, which can be moved out of the front side of the housing of the tachograph, for reloading a tape reel (32, 41, 54, 68) forming the printing-material supply, and a feed roller (35, 47, 58, 66) which is operatively connected frictionally to the thermal printing head (29) with the interposition of the printing material and is driven by a drive, **characterized**
- **in that** the thermal printing head (29) and the feed roller (35, 47, 58, 66) can be separated spatially from each other by moving the support out of the housing (2) of the tachograph (1),
- the thermal printing head (29) and the feed roller (35, 47, 58, 66) are assigned to each other in such a manner that, after a tape reel (32, 41, 54, 68) has been inserted into the support, as the support moves back into the housing (2) an initial section (38, 45, 60, 72) of the printing material, which initial section protrudes in a suitable length from the tape reel (32, 41, 54, 68), is automatically clamped between the thermal printing head (29) and the feed roller (35, 47, 58, 66) and, after the support has moved back, is situated between a front plate (17, 50, 57, 65), which delimits the support on the front side, and the front wall (3) of the tachograph (1), and
- **in that**, as the support moves back into the housing (2), the feed roller (35, 47, 58) is received by a gripping device assigned to the shaft (39, 59) of the feed roller (35, 47, 58).

2. Tachograph according to Claim 1, **characterized in that** a section, which is parallel to the feed roller, of the closing gap existing between the front plate (17, 50, 57, 65) and the front wall (3) is designed as a discharge slot (24, 51, 73) for the printed records produced.

3. Tachograph according to Claim 1, **characterized in that** at least one of the outer edges of the discharge slot (24, 51, 73) is formed as a tear-off edge.

4. Tachograph according to Claim 1, **characterized in that** the thermal printing head (29) is arranged in the housing (2),
**in that** a mount (31, 43) assigned to the tape reel (32, 41) is formed in the support, and
**in that** a construction space (34, 46) serving for the arrangement of the feed roller (35, 47) and of the drive (36, 48) driving the feed roller (35, 47) is provided between the mount (31, 43) and the front plate (17, 50), which delimits the support on the front side.

5. Tachograph according to Claim 1, **characterized in that** the support is designed in such a manner that the drive for driving the feed roller (58) is assigned a space which adjoins the mount (53) of the tape reel (54) laterally essentially in the axial direction thereof.

6. Tachograph according to Claim 1, **characterized in that** the support is designed as a folding draw (55) which is mounted rotatably about an axis (56) arranged at right angles with respect to the vertical axis of the tachograph (1).

7. Tachograph according to Claim 1, **characterized in that** the support is designed as a push draw (28, 40) which is movable at right angles with respect to the front wall (3) of the tachograph (1).

8. Tachograph according to Claim 1, **characterized in that** the support is designed as a pivoting draw (61) rotatable about an axis (62, 63) arranged parallel with respect to the vertical axis of the tachograph (1).

9. Tachograph according to Claim 1, **characterized in that** the support is designed in such a manner that a tape reel (41, 54, 68) can be inserted essentially transversely to the vertical axis of the tachograph (1).

10. Tachograph according to Claim 7, **characterized in that** the tape reel (41) is held in an axially slotted cassette (42) which can be inserted into the support.

11. Tachograph according to Claim 10, **characterized in that** the cassette (42) is formed directly in the support which is displaceable/pivotable relative to the tachograph (1).

12. Tachograph according to Claim 9, **characterized in that** the mount (67) is equipped with a spindle (70) which is assigned to the reel core (71) of the tape reel (68) and is moulded on it in a floating manner.

13. Tachograph according to Claim 12, **characterized in that** a securing means which serves to axially secure the tape reel (68) and has an excess size in comparison to the opening of the reel core (71) of the tape reel (68) is formed at the free end of the spindle (70).

14. Tachograph according to Claim 1, **characterized in that** the thermal printing head (29), the feed roller (47, 66) and the support are arranged and designed with respect to the preferred fitted position of the tachograph (1) in such a manner that the initial section (45, 72) of the printing material protrudes in a downwardly pointing manner from the tape reel (41, 68), and
**in that** the bottom section, which is parallel to the feed roller of the closing gap between the front plate (50, 65) of the support and the front wall (3) of the tachograph (1) is designed as a discharge slot (51, 73) for the printed records.

15. Tachograph according to Claim 1, **characterized in that** a sensor, preferably a reflex light barrier, is provided which, as the support moves back into the housing (2), recognizes an initial section (38, 45, 60, 72) of the printing material, which section protrudes from the tape reel (32, 41, 54, 68).

16. Tachograph according to Claim 1, **characterized in that** the thermal printing head (29) is mounted in a spring-loaded manner, and
**in that** a wedge-type connection is provided between the thermal printing head (29) and the support to raise and bring the thermal printing head (29) into operative connection with the feed roller (35, 47, 58) during the movement of the support into the housing (2).

17. Tachograph according to Claim 1, **characterized in that** driving means bringing about a raising/lowering are assigned to the thermal printing head (29), and
**in that** the driving means can be controlled by a sensor scanning the position of the support.

18. Tachograph according to Claim 1, **characterized in that** the thermal printing head (29) is arranged at an inclination with respect to the direction of movement of the support, and
**in that**, as the support moves into the closed position, the thermal printing head (29) is raised directly by the feed roller (35, 47, 58) into the printing position.

19. Tachograph according to Claim 1, **characterized in that** the thermal printing head (29) is mounted in the housing (2) in such a manner that, to apply the printing pressure, it is movable essentially in the direction of movement of the support, the movement being initiated via the feed roller (66), and
**in that** locking means are assigned to the support.

20. Tachograph according to Claim 1, **characterized in that** a trimming device assigned to the closing gap is provided.

## Revendications

1. Tachygraphe avec un système d'impression, lequel comporte une tête d'impression thermique (29) et un support pouvant être sorti du boîtier du tachygraphe sur le côté avant, permettant ainsi de recharger un rouleau de bande à imprimer (32, 41, 54, 68) formant la réserve de support d'impression, ainsi qu'un tambour de transport (35, 47, 58, 66) agissant en assemblage par friction avec la tête d'impression thermique (29), le support d'impression étant intercalé entre les deux, et le dit tambour de transport étant commandé par un mécanisme d'entraînement,
**caractérisé par le fait**
- **que** la tête d'impression thermique (29) et le tambour de transport (35, 47, 58, 66) peuvent être séparés l'un de l'autre en sortant le support du boîtier (2) du tachygraphe (1),
- **que** la tête d'impression thermique (29) et le tambour de transport (35, 47, 58, 66) correspondent l'un à l'autre de telle manière que, après la mise en place d'un rouleau de bande à imprimer (32, 41, 54, 68) dans le support, lors du repoussement du support dans le boîtier (2), un début (38, 45, 60, 72) du support d'impression dépassant d'une longueur appropriée du rouleau de bande à imprimer (32, 41, 54, 68) est serré automatiquement entre la tête d'impression thermique (29) et le tambour de transport (35, 47, 58, 66) et se trouve, une fois que le support a été repoussé, entre une plaque frontale (17, 50, 57, 65) limitant le support du côté avant et une paroi avant (3) du tachygraphe (1) et
- **que** le tambour de transport (35, 47, 58), lors du repoussement du support dans le boîtier (2), est réceptionné par un système de captage correspondant à l'arbre (39, 59) du tambour de transport (35, 47, 58).

2. Tachygraphe selon la revendication 1,
**caractérisé par le fait**
**qu'**une partie, parallèle au tambour de transport, de l'interstice existant en position fermée entre la plaque frontale (17, 50, 57, 65) et la paroi avant (3) est conçu comme fente de sortie (24, 51, 73) pour les documents imprimés produits.

3. Tachygraphe selon la revendication 1,
**caractérisé par le fait**
**que** au moins l'une des arêtes extérieures de la fente de sortie (24, 51, 73) est ménagée comme arête de déchirement.

4. Tachygraphe selon la revendication 1,
**caractérisé par le fait**
**que** la tête d'impression thermique (29) est disposée dans le boîtier (2),
**qu'**un logement (31, 43) destiné au rouleau de bande à imprimer (32, 41) est ménagé dans le support et
**que**, entre le logement (31, 43) et la plaque frontale (17, 50) limitant le support du côté avant, il est prévu un espace servant à mettre en place le tambour de transport (35, 47) et le mécanisme (36, 48) d'entraînement commandant le tambour de transport (35, 47).

5. Tachygraphe selon la revendication 1,
**caractérisé par le fait**
**que** le support est conçu de telle manière qu'un espace est attribué au mécanisme d'entraînement destiné à la commande du tambour de transport (58), le dit espace se trouvant, pour l'essentiel, dans le sens de l'axe du rouleau de bande à imprimer (54), latéralement immédiatement après son logement (53).

6. Tachygraphe selon la revendication 1,
**caractérisé par le fait**
**que** le support est conçu comme chargeur à bascule (55) suspendu en rotation autour d'un axe (56) disposé perpendiculairement à l'axe vertical du tachygraphe (1).

7. Tachygraphe selon la revendication 1,
**caractérisé par le fait**
**que** le support est conçu comme tiroir (28, 40) se déplaçant perpendiculairement par rapport à la paroi avant (3) du tachygraphe (1).

8. Tachygraphe selon la revendication 1,
**caractérisé par le fait**
**que** le support est conçu comme chargeur pivotant (61) pouvant tourner autour d'un axe (62, 63) disposé parallèlement à l'axe vertical du tachygraphe (1).

9. Tachygraphe selon la revendication 1,
**caractérisé par le fait**
**que** le support est conçu de telle manière qu'un rouleau de bande à imprimer (41, 54, 68) peut être inséré, pour l'essentiel, perpendiculairement à l'axe vertical du tachygraphe (1) .

10. Tachygraphe selon la revendication 7,
**caractérisé par le fait**
**que** le rouleau de bande à imprimer (41) est logé dans une cassette (42) destinée à être mise en place dans le support et ayant une fente axiale.

11. Tachygraphe selon la revendication 10,
**caractérisé par le fait**
**que** la cassette (42) est ménagée directement dans le support pouvant coulisser ou pivoter par rapport au tachygraphe (1).

12. Tachygraphe selon la revendication 9,
**caractérisé par le fait**
**que** le logement (67) est équipé d'un axe (70), qui correspond au noyau (71) du rouleau de bande à imprimer (68) et qui est fixé en porte-à-faux.

13. Tachygraphe selon la revendication 12,
**caractérisé par le fait**
**qu'**un moyen destiné à assurer la fixation axiale du rouleau de bande à imprimer (68) et dépassant en face de l'ouverture du noyau (71) du rouleau de bande à imprimer (68) est ménagé à l'extrémité libre de l'axe (70).

14. Tachygraphe selon la revendication 1,
**caractérisé par le fait**
**que**, par rapport à la position préférée d'encastrement du tachygraphe (1), la tête d'impression thermique (29), le tambour de transport (47, 66) et le support sont placés ou sont conçus de telle manière que le début (45, 72) du support d'impression dépasse du rouleau de bande à imprimer (41, 68) et est tourné vers le bas et
**que** la partie de l'interstice, qui se trouve en bas et qui est parallèle au tambour de transport, existant en position fermée entre la plaque frontale (50, 65) du support et la paroi avant (3) du tachygraphe (1), est conçue comme fente de sortie (51, 73) pour les documents imprimés.

15. Tachygraphe selon la revendication 1,
**caractérisé par le fait**
**qu'**il est prévu un capteur, d'une façon préférentielle, une barrière lumineuse à réflexion qui reconnaît un début (38, 45, 60, 72) dépassant du rouleau de bande à imprimer (32, 41, 54, 68) lorsque le support est repoussé dans le boîtier (2).

16. Tachygraphe selon la revendication 1,
**caractérisé par le fait**
**que** la tête d'impression thermique (29) est suspendue sur ressort et
**que**, entre la tête d'impression thermique (29) et le support, il est prévu une liaison par engrenages coniques pour relever la tête d'impression thermique (29) et l'amener en prise d'interaction avec le tambour de transport (35, 47, 58) pendant le déplacement du support dans le boîtier (2).

17. Tachygraphe selon la revendication 1,
**caractérisé par le fait**
**que** des moyens d'entraînement provoquant un relèvement/un abaissement sont affectés à la tête d'impression thermique (29) et
**que** les moyens d'entraînement peuvent être commandés par un capteur détectant la position du support.

18. Tachygraphe selon la revendication 1,
**caractérisé par le fait**
**que** la tête d'impression thermique (29) est disposée d'une façon inclinée par rapport à la direction de déplacement du support et
**que** la tête d'impression thermique (29) est relevée dans la position d'impression directement par le tambour de transport (35, 47, 58) lors du déplacement du support dans la position fermée.

19. Tachygraphe selon la revendication 1,
**caractérisé par le fait**
**que** la tête d'impression thermique (29) est suspendue dans le boîtier (2) de manière telle qu'elle peut se déplacer essentiellement dans la direction de déplacement du support pour obtenir à la force d'impression, le déplacement étant initié par le tambour de transport (66), et
**que** des moyens de verrouillage sont affectés au support.

20. Tachygraphe selon la revendication 1,
**caractérisé par le fait**
**qu'**il est prévu un système de déchirement affecté à l'interstice existant dans la position fermée.
